# EUROPÄISCHE PATENTANMELDUNG

(11) **EP 0 635 709 A2**
(43) Veröffentlichungstag der Anmeldung: **25.01.1995**
(21) Anmeldenummer: 94111405.0
(22) Anmeldetag: 21.07.1994
(51) Int. Cl.: G01M 3/16

(54) **Leckage-Erkennungssystem**

(30) Priorität: 23.07.1993 DE 4324865
(71) Anmelder: W.L. GORE & ASSOCIATES GmbH, D-85636 Putzbrunn (DE)
(72) Erfinder: Virnich, Ulrich, D-92318 Neumarkt (DE)
(74) Vertreter: Klunker . Schmitt-Nilson . Hirsch

(57) **Zusammenfassung**

Leckage-Erkennungssystem, beispielsweise für die Erkennung von Öl-Leckagen, mit einer Mehrzahl örtlich verteilter integrierter Einheiten (19) mit je einem Leckagesensor (11) und einer Vorverarbeitungseinrichtung und mit einer Auswerteeinrichtung (25), die mit den einzelnen integrierten Einheiten (19) oder mit einer Gruppe von integrierten Einrichtungen (19) über eine serielle Busleitung (23) verbunden ist. In jeder Vorverarbeitungseinrichtung wird eine Temperaturkompensation des von dem Leckagesensor (11) erhaltenen Meßwertes vorgenommen.

## Beschreibung

Die Erfindung betrifft ein Leckage-Erkennungssystem gemäß Oberbegriff des Anspruchs 1 sowie ein Verfahren zur Kalibrierung eines solchen Leckage-Erkennungssystems.

Leckage-Erkennungssysteme werden verwendet, um das unerwünschte Austreten kontaminierender Substanzen wie beispielsweise Öl, Benzin usw., aus Vorratsbehältern wie Tanks zu erkennen und rechtzeitig Gegenmaßnahmen ergreifen zu können.

Aus der EP 0 337 630 A1 ist ein Leckagesensor für die Erkennung von Ölleckagen bekannt, der ein streifenförmiges Sensormaterial aufweist, das in ein flaches Gehäuse eingeformt ist, das wiederum in Öl absorbierendes Material eingebettet ist. Das streifenförmige Sensormaterial ist beiden Endes mit je einer elektrischen Zuleitung verbunden. Das Sensormaterial kann aus einer Mischung aus einer elektrisch leitenden Substanz wie Kohlenstoff mit porösem Polytetrafluorethylen (PTFE) bestehen. Im Fall der Benetzung mit Öl ändert sich der elektrische Widerstand des Sensorstreifens, was für eine Leckage-Erkennung ausgenutzt werden kann. Das flache Gehäuse, in welches das streifenförmige Sensormaterial eingebettet ist, kann aus porösem PTFE bestehen, so daß Leckage-Öl zu dem streifenförmigen Sensormaterial vordringen kann. Bei dem Öl absorbierenden Material, in welches das Sensorgehäuse eingebettet ist, kann es sich um ein Textilmaterial wie isotaktisches Polypropylen handein. Dieses Material absorbiert nahezu augenblicklich Öl, absorbiert jedoch nahezu kein Wasser. Dieses Öl absorbierende Material sorgt dafür, daß Leckage-Öl großflächig auf das streifenförmige Sensormaterial gelangt und daß das Leckage-Öl lange genug gehalten wird, um zu dem Sensormaterial vorzudringen. Als Folge wird die Empfindlichkeit des Leckage-Sensors erhöht.

Das den eigentlichen Sensor einbettende Öl absorbierende Material ist in einer schützenden Röhre untergebracht, die einerseits Öffnungen für den Durchtritt von Leckage-Öl aufweist und andererseits eine Herausführung für die mit dem Sensorstreifen verbundenen elektrischen Leitungen aufweist.

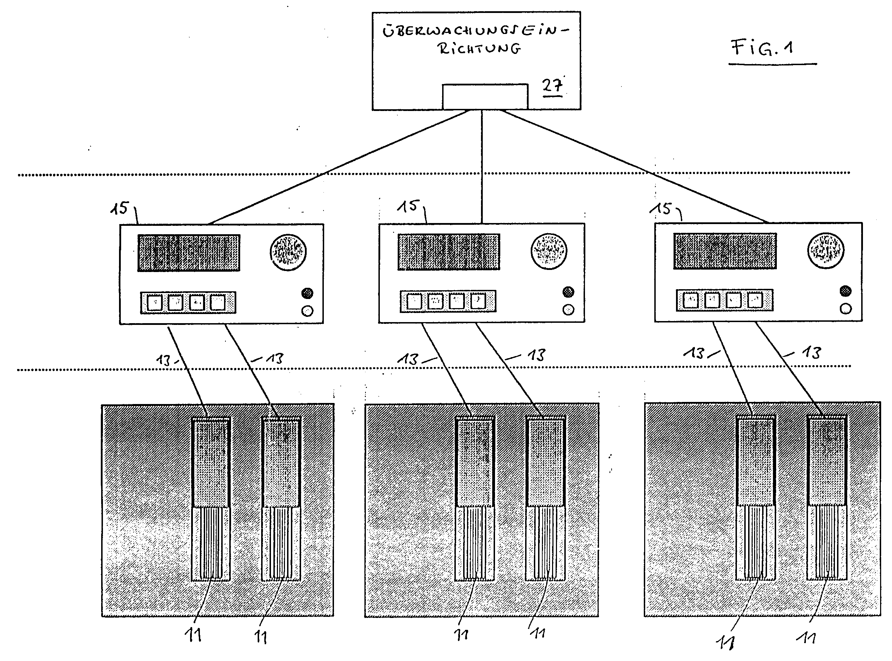

Bei einem in Fig. 1 gezeigten Leckage-Erkennungssystem gemäß Oberbegriff des Anspruchs 1 ist jedes Paar einer Vielzahl der beschriebenen Leckagesensoren 11 über zwei individuell lange Zuleitungskabel 13 mit je einer individuellen Auswerteeinrichtung 15 verbunden. Die Auswerteeinrichtungen 15 erfassen und verarbeiten Widerstandsänderungen der Leckagesensoren 11. Da sich die Auswerteeinrichtungen 15 und die Leckagesensoren 11 in einem erheblichen räumlichen Abstand voneinander befinden können, ergibt sich das Problem, daß Widerstandsänderungen über lange Zuleitungskabel gemessen werden müssen. Aufgrund des Eigenwiderstands des Zuleitungskabels ist der maximal mögliche Abstand zwischen Leckagesensor 11 und Auswerteeinrichtung 15 begrenzt. Fremdeinflüsse auf die lange Zuleitung, wie elektromagnetische Störungen und Spannungsänderungen, führen zu Störungen im Meßbetrieb, was wiederum Fehlalarm auslösen kann. Kommt ein derartiges Leckage-Erkennungssystem im explosionsgefährdeten Bereich zum Einsatz, ergibt sich außerdem eine Beschränkung hinsichtlich der Zuleitungslänge aufgrund der maximal zulässigen Kapazität in einem explosionsgefährdeten Bereich. Bei zu großer Zuleitungslänge und entsprechend großer Kapazität besteht die Gefahr kapazitiver Aufladung und Funkenbildung bei der Entladung der Kapazität. Zuleitungen, die als Meßleitungen geeignet sind, sind teuer. Die relativ hohen Kosten von Meßleitungen gehen vielfach in die Gesamtkosten des Leckage-Erkennungssystems ein, da jeder Leckagesensor 11 mit einem individuellen Zuleitungskabel 13 mit der je zugehörigen Auswerteeinrichtung 15 verbunden werden muß.

Zu den hohen Investitionskosten für ein derartiges Leckage-Erkennungssystem kommen noch relativ hohe Installations- und Servicekosten hinzu. Einerseits muß nicht nur für jeden Leckagesensor 11 ein eigenes Zuleitungskabel 13 verlegt werden. Andererseits entstehen hohe Installationskosten dadurch, daß für jeden Leckage-Sensor 11 ein individueller Abgleich unter Berücksichtigung der individuellen Länge des je zugehörigen individuellen Zuleitungskabels 13 erforderlich ist. Dies ist nicht nur sehr zeitaufwendig sondern erfordert geschultes und damit kostenintensives Personal. Des weiteren entstehen Kosten dadurch, daß sich bei jedem Fehlalarm ein Servicetechniker an den Ort der vermeintlichen Leckage begeben und eine Untersuchung vornehmen muß.

Derartige Probleme lassen sich überwinden mit einem erfindungsgemäßen Leckage-Erkennungssystem, wie es in Patentanspruch 1 angegeben ist.

Durch die Vorverarbeitung der Sensor-Widerstandswerte in digitalisierte Meßsignale am Ort des jeweiligen Leckage-Sensors kommt man nicht nur zu einer Signalübertragung, die sich mit wesentlich geringerer Störanfälligkeit über wesentlich größere Strecken als bei dem bekannten Leckage-Erkennungssystem übertragen läßt. Außerdem ermöglicht diese Vorverarbeitung die Übertragung mittels einer seriellen Busleitung, die an den einzelnen Leckagesensoren entlang geführt ist und eine Vielzahl von Einzelleitungen bei dem bekannten Leckage-Erkennungssystem ersetzt. Dies führt zu einer erheblichen Kosteneinsparung, weil nicht nur weniger aufwendige Kabel verwendet werden können sondern auch wesentlich weniger Kabelverlegeaufwand entsteht. Eine weitere erhebliche Kosteneinsparung ergibt sich dadurch, daß nicht mehr soviele Auswerteeinrichtungen erforderlich sind. Vielmehr reicht eine einzige Auswerteeinrichtung, die im Zeitmultiplex nacheinander mit den einzelnen Vorverarbeitungseinrichtungen der einzelnen Leckagesensoren in Verbindung treten kann, um deren Meßdatensignale abzufragen. Des weiteren ermöglicht die Vorverarbeitung am Ort des jeweiligen Leckagesensors unter Einsatz von aktiven Bauelementen eine Temperaturkompensation am Ort des Leckagesensors, so daß genauere Meßdaten erhalten werden, was zur Vermeidung von Fehlalarmen beiträgt.

Aufgrund der Verwendung einer für Störungen wenig anfälligen Datenleitung und die Vorverarbeitung der von den Leckagesensoren gelieferten Widerstandsmeßwerte mittels aktiver Bauelemente kann eine Übertragung an eine Auswertestation vorgenommen werden, die mehrere Kilometer von dem jeweiligen Leckagesensor entfernt sein kann.

Die Vorverarbeitungseinrichtung kann mit dem Leckagesensor in einem gemeinsamen Gehäuse untergebracht sein. Dies kann das für den Leckagesensor ohnehin verwendete Gehäuse sein. Die Vorverarbeitungseinrichtung ist somit ein Bestandteil des Sensors. Dies erleichtert die Installation des Leckage-Erkennungssystems.

Da die Leitungsanordnung zur Verbindung der Auswerteeinrichtung mit den einzelnen Leckagesensoren keine Widerstandswerte mehr zu übertragen braucht, ist der Leitungswiderstand der Leitungsanordnung unkritisch. Das Erfordernis bei dem bekannten Leckage-Erkennungssystem, für jeden einzelnen Leckagesensor und eine je zugeordnete individuelle Zuleitung einen Abgleich vornehmen zu müssen, entfällt somit.

Da man das erfindungsgemäße Leckage-Erkennungssystem selbstkalibrierend gestalten kann, ist für die Installation des erfindungsgemäßen Leckage-Erkennungssystems kein besonders geschultes Personal mehr erforderlich. Zum Zweck der Selbstkalibrierung wird das erfindungsgemäße Leckage-Erkennungssystem zunächst mit in nicht-kontaminierter Umgebung befindlichen Leckagesensoren in Betrieb genommen. Der dabei entstehende Meßwert wird als Meßreferenzwert gespeichert. Bei den nachfolgenden Leckageüberwachungsmessungen werden die jeweils erhaltenen Ist-Meßwerte mit dem Referenzmeßwert verglichen. Das Ergebnis des Vergleichs wird dann für die Erkennung einer Leckage ausgewertet.

Für das erfindungsgemäße Leckage-Erkennungssystem lassen sich Lichtwellenleiter als verbindende Leitungsanordnung verwenden, da im Gegensatz zu dem bekannten Leckage-Erkennungssystem über die Leitungsanordnung keine elektrischen Meßwerte sondern nur digitalisierte Daten übertragen werden müssen.

Häufig ist es erwünscht, das Leckage-Erkennungssystem wählbar mit unterschiedlichen Sensortypen zu betreiben, die entweder auf verschiedene Leckage-Substanzen oder auf verschieden starke Konzentrationen von Leckage-Substanzen ansprechen und/oder eine unterschiedliche Empfindlichkeit aufweisen. Es kann auch erforderlich werden, daß ein bereits im Einsatz befindlicher Sensortyp durch einen davon verschiedenen anderen Sensortyp ersetzt werden muß, wenn mehr oder weniger Kontamination mit Leckage-Substanz auftritt als ursprünglich vermutet und somit der bereits im Einsatz befindliche Sensor durch einen entsprechend weniger oder mehr empfindlichen Sensortyp ersetzt werden soll. Das Ersetzten durch einen anderen Sensortyp erfordert eine Anpassung des Leckage-Erkennungssystems an die neuen Sensorbedingungen. Hierfür war bisher eine manuelle Einstellung der Verarbeitungselektronik vor Ort durch einen Experten erforderlich.

Eine besonders bevorzugte Ausführungsform der vorliegenden Erfindung ist daher mit einer Erkennungseinrichtung zur Erkennung des jeweils angeschlossenen Sensortyps und zur Steuerung der Vorverarbeitungs-und/oder der Auswerteeinrichtung in eine dem jeweils angeschlossenen Sensortyp entsprechende Betriebsart versehen. Für diesen Zweck kann jedem Sensor ein Identifikationselement zugeordnet werden, wobei jedem speziellen Sensortyp ein anderes Identifikationselement als den anderen Sensortypen zugeordnet wird. Das Identifikationselement kann von der Vorverarbeitungseinrichtung und/oder der Auswerteeinrichtung identifiziert werden, woraus der jeweils angeschlossene Sensortyp detektiert werden kann. Mit diesem Detektionssignal kann dann die Vorverarbeitungseinrichtung und/oder die Auswerteeinrichtung automatisch auf eine für den jeweils angeschlossenen und identifizierten Sensortyp geeignete Betriebsart eingestellt werden.

Bei einer besonders bevorzugten Ausführungsform sind in jeder Vorverarbeitungseinrichtung und/oder in der Auswerteeinrichtung Unterprogramme gespeichert, die je die spezielle Betriebsart für einen speziellen Sensortyp steuern. Durch das Detektions- oder Identifikationssignal wird dann jeweils das für den identifizierten Sensortyp bestimmte Unterprogramm ausgewählt.

Bei einem derartigen Leckage-Erkennungssystem reicht es, einen bereits im Betrieb befindlichen Sensortyp durch einen anderen Sensortyp zu ersetzten. Mittels eines durch dieses Ersetzten ausgelösten Identifikationsvorgangs und/oder mittels periodisch oder permanent durchgeführter Identifikationsvorgänge wird dann der nun benutzte Sensortyp ermittelt und wird die hierfür geeignete Betriebsart der Vorverarbeitungseinrichtung und/oder der Auswerteeinrichtung gesteuert. Bildet man den Sensor und das Identifikationselement als eine steckbare Baueinheit aus, die mittels Steckverbindung mit der Vorverarbeitungseinrichtung verbunden werden kann, kann der Betreiber des Leckage-Erkennungssystems den Austausch des Sensorsystems selbst vornehmen und braucht keinerlei Unterstützung durch einen Experten für das Leckage-Erkennungssystem.

Weitere Ausgestaltungen der Erfindung sind in Unteransprüchen angegeben.

Die Erfindung wird nun anhand von Ausführungsformen näher erläutert.
In den Zeichnungen zeigen:
- Fig. 1: das bereits erläuterte bekannte Leckage-Erkennungssystem;
- Fig. 2: eine Ausführungsform eines erfindungsgemäßen Leckage-Erkennungssystems;
- Fig. 3: eine schematische Darstellung einer ersten Ausführungsform eines Leckagesensors mit Vorverarbeitungseinrichtung;
- Fig. 4: eine schematische Darstellung mit externer Spannungsversorgung;
- Fig. 5: eine schematische Darstellung mit interner Spannungsversorgung:
- Fig. 6: eine schematische Darstellung mit interner Spannungsversorgung und Signalübertragung mittels Lichtwellenleiter; und
- Fig. 7: eine schematische Darstellung einer zweiten Ausführungsform eines Leckage-Sensors mit Vorverarbeitungseinrichtung, wobei zusätzlich eine Sensortyp-Erkennungseinrichtung vorgesehen ist.

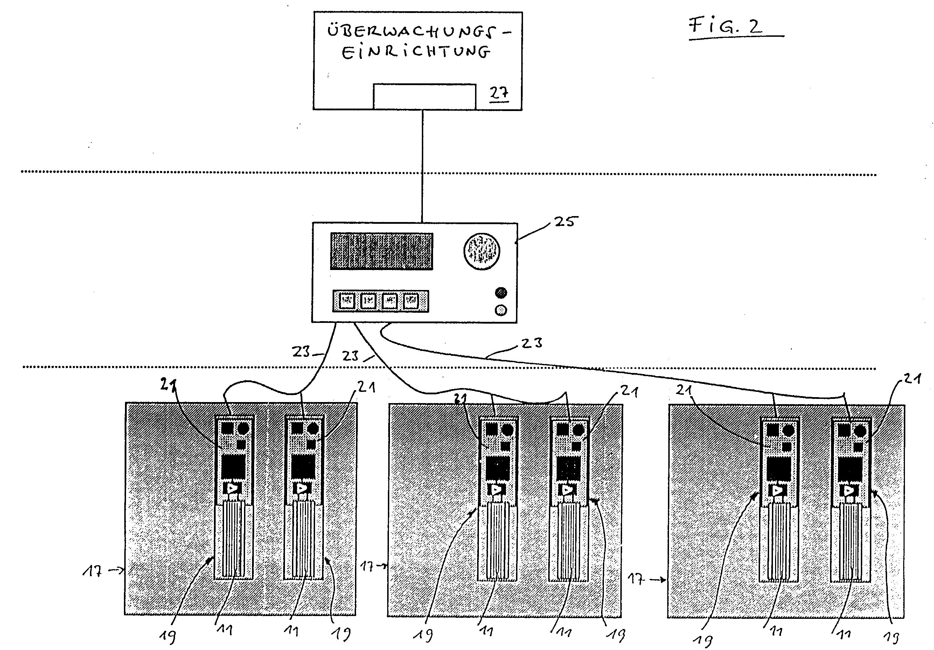

Bei der in Fig. 2 dargestellten Ausführungsform eines erfindungsgemäßen Leckage-Erkennungssystems ist die Möglichkeit angedeutet, mehrere Leckagesensoren 11 in Gruppen zusammenzufassen und jede dieser Gruppen mit einem gemeinsamen seriellen Datenbus mit der Auswerteeinrichtung zu verbinden. Diese Aufteilung in Gruppen mit je einem seriellen Datenbus empfiehlt sich dann, wenn die Leckagesensoren einer jeden Gruppe in räumlicher Nähe, die verschiedenen Gruppen von Leckagesensoren jedoch räumlich weit voneinander entfernt sind, beispielsweise sternförmig. Dies kann der Fall sein, wenn beispielsweise in einer Tankstelle oder in einer Ölraffinerie mehrere Tanks oder Tankgruppen zu überwachen sind, die räumlich relativ weit voneinander entfernt sind. Für diesen Fall mag es wirtschaftlicher sein, nicht sämtliche Leckagesensoren aller Gruppen mit einer einzigen seriellen Busleitung zu verbinden sondern zu jeder Gruppe eine separate serielle Busleitung verlegen.

Befinden sich jedoch alle Leckagesensoren bzw. alle Gruppen von Leckagesensoren in räumlicher Nähe zueinander, wird es im allgemeinen zu bevorzugen sein, sämtliche Leckagesensoren mit einer einzigen seriellen Busleitung zu verbinden.

Bei der in Fig. 2 gezeigten Ausführungsform der Erfindung sind als reines Erläuterungsbeispiel drei Gruppen 17 mit je zwei integrierten Einheiten 19 aus je einem Leckagesensor 11 und einer Vorverarbeitungseinrichtung 21 dargestellt. Jede Gruppe 17 ist über eine ihr gemeinsame serielle Busleitung 23 mit einer allen Gruppen gemeinsamen Auswertungseinrichtung 25 verbunden.

Für den Fall, daß sehr viele Gruppen 17 oder integrierte Einheiten 19 über einen großen Raum verteilt sind, mag es auch zu bevorzugen sein, mehrere Auswerteeinrichtungen 25 vorzusehen, die je mit einer oder mehreren der Gruppen 17 verbunden sind.

Bei der dargestellten Ausführungsform ist an die Auswerteeinrichtung 25 eine Überwachungs- und Alarmeinrichtung 27 angeschlossen, die bei der Feststellung eines Leckagefalles ein Alarmsignal gibt.

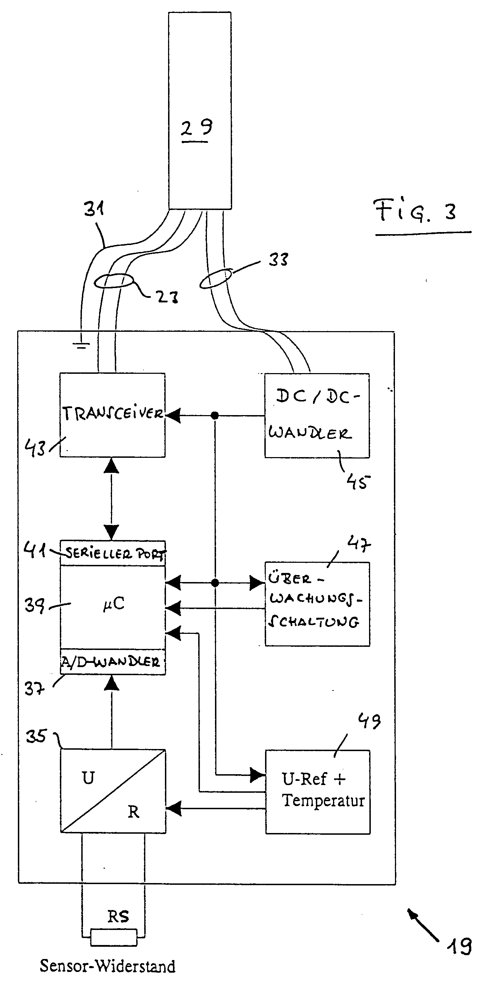

Fig. 3 zeigt eine einzelne integrierte Einheit 19 in Blockschaltbilddarstellung und Verbindung mit einem Buskabel 29. Das Buskabel 29 enthält eine zweiadrige serielle Busleitung 23, eine Erdungsleitung 31 und eine zweiadrige Spannungsversorgungsleitung 33. Das Buskabel 29 ist als serielles Kabel ausgebildet, von dem stichleitungsartige Abzweige zu den einzelnen integrierten Einheiten 19 führen.

In Fig. 3 ist der Leckagesensor ersatzweise durch einen Sensorwiderstand RS dargestellt. Dessen Anschlüsse sind mit einer Widerstands-Spannungs-Wandlerschaltung 35 verbunden. Deren Ausgang führt auf einen Analog/Digital-Wandler (A/D) 37, der Teil eines Mikrocontrollers (µC) 39 ist. Über einen seriellen Port (SIO) 41 steht der Mikrocontroller 39 mit einem Transceiver, d.h. Sender/Empfänger, 43 in Verbindung, dem eine Potentialtrennungseinrichtung zugeordnet ist. Der Transceiver 43 ist seinerseits mit den beiden Adern der seriellen Busleitung 23 verbunden.

An die Spannungsversorgungsleitung 33 ist ein potentialmäßig trennender Gleichspannungs/Gleichspannungs-Wandler (DC/DC) 45 angeschlossen. Dieser versorgt die einzelnen Komponenten der integrierten Einheit 19 mit den erforderlichen Versorgungsspannungen. Zu diesen Komponenten gehört eine den Mikrocontroller 39 auf fehlerfreies Arbeiten überwachende Überwachungsschaltung (Watchdog) 47. Außerdem ist eine Temperaturdetektorschaltung 49 vorgesehen, die ein der jeweiligen Ist-Temperatur entsprechendes Ausgangssignal mindestens an den Mikrocontroller 39 liefert, bei der dargestellten Ausführungsform auch an den Widerstands/Spannungs-Wandler 35.

Die Arbeitsweise der in Fig. 3 dargestellten integrierten Einheit 19 ist wie folgt:
In Abhängigkeit davon, ob der Leckagesensor 11 mit Leckagesubstanz, beispielsweise Öl oder Benzin, benetzt ist oder nicht, ändert sich der elektrische Widerstand RS des Leckagesensors 11. Der jeweilige Widerstandswert wird mittels des Widerstands/Spannungs-Wandlers 35 in ein Spannungssignal umgesetzt, das mittels des Analog/Digital-Wandlers 37 in ein digitales Meßdatensignal umgesetzt wird. Dieses wird im Mikrocontroller 39 abrufbereit gehalten.

Jeder an eine gemeinsame serielle Busleitung 23 angeschlossenen integrierten Einheit 19 ist ein individueller Adressencode zugeordnet. Die Auswerteeinrichtung 25 fragt die Meßdatensignale der einzelnen integrierten Einheiten 19 in einer vorbestimmten Reihenfolge ab, indem sie über die serielle Busleitung 23 in zeitlicher Staffelung die Adressencodes der einzelnen abzufragenden integrierten Einheiten 19 aussendet. Die ausgesendeten Adressencodes werden jeweils in den Transceivern 43 oder in den Mikrocontrollern 39 aller an die serielle Busleitung 23 angeschlossenen integrierten Einheiten 19 mit deren individuellen Adressencodes verglichen. Diejenige integrierte Einheit 19, deren Adressencode mit dem von der Auswerteeinrichtung 25 gerade ausgesendeten Adressencode übereinstimmt, sendet ihr jeweiliges Meßdatensignal über die serielle Busleitung 23 an die Auswerteeinrichtung 25. Die Abfrage der einzelnen integrierten Einheiten 19 geschieht somit im Zeitmultiplex, möglicherweise mit Prioritätsvorgabe für einzelne integrierte Einheiten 19. Auf diese Weise werden die einzelnen integrierten Einheiten 19 nacheinander daraufhin abgefragt, ob sich bei ihnen eine Meßwertänderung ergeben hat.

Die galvanische Trennung im Bereich des Transceivers 43 und im Bereich des Gleichspannungs/Gleichspannungs-Wandler 45 ist aus Sicherheitsgründen in explosionsgefährdeten Bereichen erforderlich.

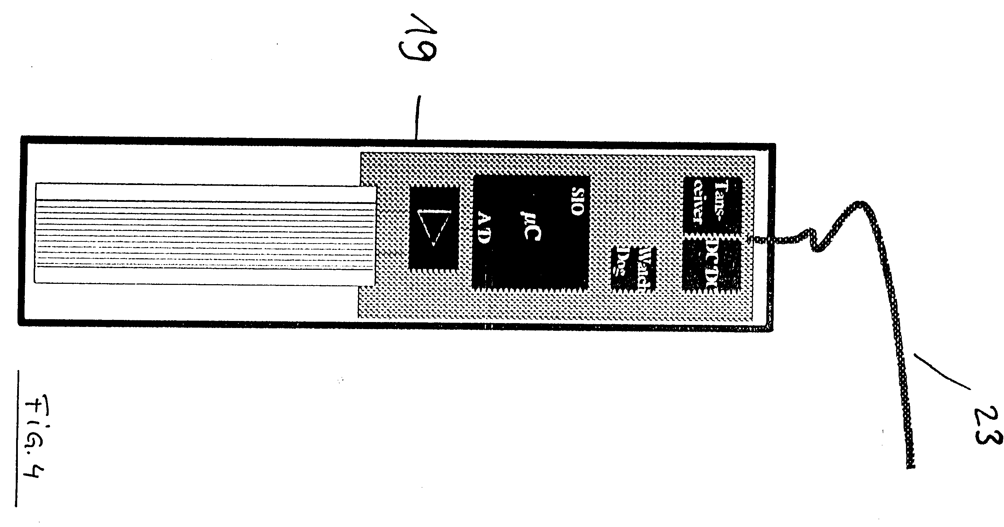

Fig. 4 zeigt eine Ausführungsform einer integrierten Einheit 19 für externe Spannungsversorgung.

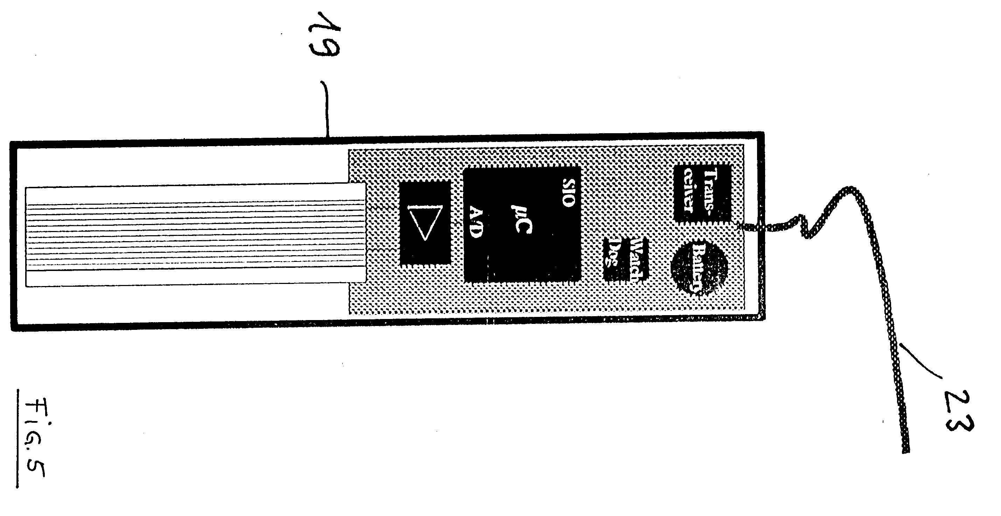

Fig. 5 zeigt eine Ausführungsform einer integrierten Einheit 19 mit interner Spannungsversorgung in Form einer Batterie. Bei dieser Ausführungsform braucht das Kabel 29 keine Spannungsversorgungsleitung 33 aufzuweisen und entfällt der Gleichspannungs/Gleichspannungswandler.

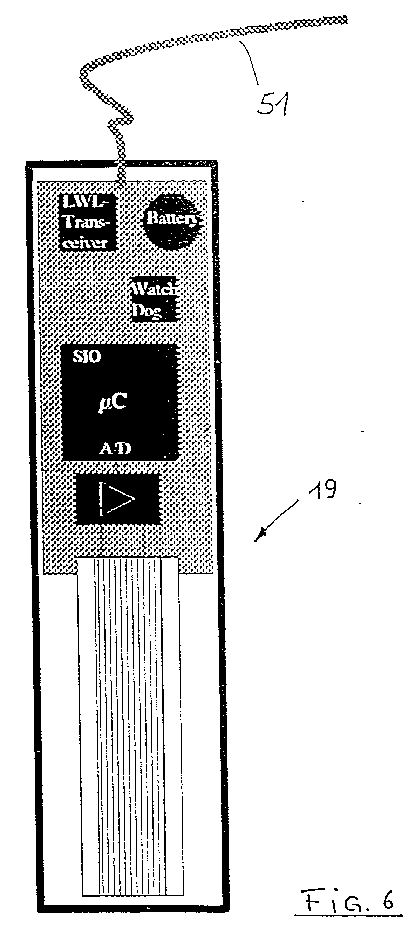

Fig. 6 zeigt eine Ausführungform, bei welcher die Übertragung zwischen der integrierten Einheit 19 und der Auswerteeinrichtung 25 über einen Lichtwellenleiter 51 geschieht.

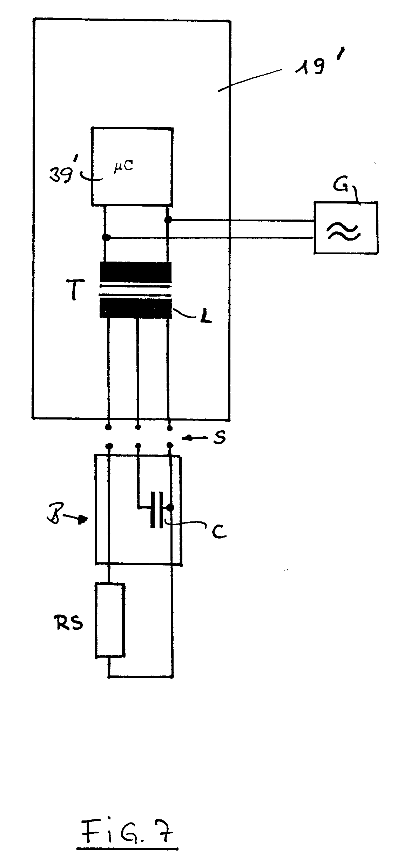

Die in Figur 7 gezeigte Ausführungsform zeigt eine modifizierte Vorverarbeitungseinrichtung 19', die im wesentlichen wie die in Figur 3 gezeigte Vorverarbeitungseinrichtung 19 aufgebaut ist und zusätzliche Komponenten für eine Sensortyp-Erkennungseinrichtung- oder Identifikationseinrichtung aufweist. In Figur 7 sind nicht alle Komponenten der Vorverarbeitungseinrichtung 19' gezeigt. Insoweit wird auf die Einzelheiten der in Figur 3 gezeigten Vorverarbeitungseinrichtung 19 verwiesen.

Bei der in Figur 7 gezeigten Ausführungsform sind die Vorverarbeitungseinrichtung 19' und eine Baueinheit B mit einem Sensor RS und einem Identifikationselement in Form eines Kondensators C mittels einer nur schematisch angedeuteten Steckverbindung S an die Vorverarbeitungseinrichtung 19' ansteckbar und von dieser lösbar. Ein Übertrager T bewirkt eine galvanische Trennung zwischen dem Mikrocontroller 39, der die Meßsignale vom Sensor RS aufnimmt und weiterverarbeitet, und der Baueinheit B. Die sekundäre Wicklung L des Übertragers T bildet bei an die Vorverarbeitungseinrichtung 19' angesteckter Baueinheit B einen LC-Resonanzkreis mit dem Identifikations-Kondensator C. Zur Identifikation des Typs des Sensors RS wird bei angesteckter Baueinheit B mittels einer Anregungssignalquelle G ein Wechselstromsignal auf den LC-Resonanzkreis gegeben. Erfolgt die Anregung mit einem geeigneten Frequenzspektrum, kommt es zu einer Resonanz bei einer Resonanzfrequenz, die von dem Kapazitätswert des Identifikations-Kondensators C abhängt. Da dem Identifikations-Kondensator C eines jeden speziellen Sensortyps ein anderer Kapazitätswert zugeordnet ist, ergibt sich für jeden Sensortyp eine ganz bestimmte Resonanzfrequenz. Dem (in Figur 7 nicht dargestellten) Analog/Digital-Wandler des Mikrocontrollers 39 ist ein Frequenz-Spannungs-Wandler vorgeschaltet. Bei Anregung des LC-Kreises mittels des Anregungsgenerators G erhält der Mikrocontroller 39 daher ein digitales Identifikationssignal, welches eine Aussage über den angeschlossenen Sensortyp macht. Mit diesem Identifikationssignal wird ein im Mikrocontroller 39' gespeichertes Unterprogramm angesteuert, das eine für den angeschlossenen Sensortyp geeignete Vorverarbeitung durch die Vorverarbeitungseinrichtung 19' steuert.

Es besteht auch die Möglichkeit, das Sensortyp-Identifikationssignal zusätzlich oder ausschließlich der Auswerteeinrichtung 25 zuzuführen, um dort eine Anzeige, beispielsweise optischer Form, auszulösen, die dem Benutzer des Leckage-Erkennungssystems Auskunft über den angeschlossenen Sensortyp gibt, oder um von der Auswerteeinrichtung 25 die von der Vorverarbeitungseinrichtung 19' gelieferten Signale in einer für den angeschlossenen Sensortyp geeigneten Betriebsart auszuwerten.

Man kann nun entweder einen Anregungsgenerator G verwenden, der eine einzige Anregungsfrequenz abgibt. In diesem Fall müssen das L des Übertragers T und die Kapazitätswerte der Identifikationskondensatoren C der einzelnen unterschiedlichen Sensortypen derart dimensioniert werden, daß die Resonanzfrequenzen genügend dicht beieinander liegen, um alle von der einzigen Anregungsfrequenz des Anregungsgenerators G angeregt werden zu können. Eine andere Möglichkeit besteht darin, einen Anregungsgenerator G zu verwenden, der unterschiedliche Frequenzen abgeben kann, beispielsweise als Wobbel-Generator für ein bestimmtes Frequenzband ausgelegt ist, das so breit ist, daß alle möglichen Resonanzfrequenzen der unterschiedlichen LC-Kreise angeregt werden können. Hierfür kann man beispielsweise einen spannungsgesteuerten Generator verwenden, der mit einer Sägezahnspannung angesteuert wird.

## Patentansprüche

1. Leckage-Erkennungssystem, beispielsweise für die Erkennung von Öl-Leckagen, mit
a) einer Mehrzahl örtlich verteilter Leckagesensoren (11; RS)
b) und einer mit den Leckagesensoren (11; RS) über eine Leitungsanordnung (29) verbundenen, von den Leckagesensoren (11; RS) räumlich getrennten Auswerteeinrichtung (25),
**dadurch gekennzeichnet,**
c) daß jeder Leckagesensor (11; RS) mit einer an dessen Ort vorgesehenen aktiven Vorverarbeitungseinrichtung (19; 19') zur Vorverarbeitung und Digitalisierung des Meßsignals des je zugehörigen Leckagesensors (11; RS) in ein Meßdatensignal verbunden ist,
d) daß die Vorverarbeitungseinrichtung (19; 19') eine Temperaturkompensationseinrichtung (39, 49) aufweist,
e) daß die Leitungsanordnung (29) eine serielle Busleitung (23) mit Abzweigungen zu den einzelnen Vorverarbeitungseinrichtungen (19; 19') zu deren Datenverbindung mit der Auswerteeinrichtung (25) aufweist
f) und daß den einzelnen Vorverarbeitungseinrichtungen (19; 19') individuelle Adressencodes zugeordnet sind und die einzelnen Vorverarbeitungseinrichtungen (19; 19') mittels von der Auswerteeinrichtung (25) oder von den Vorverarbeitungseinrichtungen ausgesendeter individueller Adressencodes ansteuerbar und/oder abfragbar sind.

2. Leckage-Erkennungssystem nach Anspruch 1, dadurch gekennzeichnet, daß mindestens eine der Vorverarbeitungseinrichtung (19') wahlweise mit unterschiedlichen Sensortypen (RS) mit je unterschiedlichem Sensorverhalten verbindbar ist
und daß eine Erkennungseinrichtung (G, L, C, 39') zur Erkennung des jeweils angeschlossenen Sensortyps und zur Steuerung der Vorverabeitungseinrichtung (19') und/oder der Auswerteeinrichtung (25) in eine dem jeweils angeschlossenen Sensortyp entsprechende Betriebsart vorgesehen ist.

3. Leckage-Erkennungssystem nach Anspruch 2, dadurch gekennzeichnet,
daß dem Leckage-Sensor (RS) ein Sensortyp-Identifikations-element (C) zugeordnet ist,
daß eine Anregungssignalquelle (G) zur Beaufschlagung des Sensortyp-Identifikationselementes (C) mit einem Anregungssignal vorgesehen ist,
daß bei Beaufschlagung des Identifikations-Elementes (C) ein von der Vorverarbeitungseinrichtung (19') und/oder der Auswerteeinrichtung (25) erkennbares und die Vorverarbeitungseinrichtung (19') und/oder die Auswerteeinrichtung (25) für die Auswertung des Sensorsignals des jeweils angeschlossenen Sensortyps steuerndes Sensortyp-Identifikationssignal erzeugt wird.

4. Leckage-Erkennungssystem nach Anspruch 3, dadurch gekennzeichnet,
daß das Sensortyp-Identifikationselement einen Identifikationskondensator (C) mit einem für verschiedene Sensortypen unterschiedlichen Kapazitätswert aufweist,
daß die Angregungssignalquelle (G) einen Wechselstromgenerator aufweist, der eine Induktivität (L) zugeordnet ist, die mit dem Identifikations-Kondensator (C) einen resonanzfähigen LC-Kreis bildet,
und daß die aus der Anregung mittels des Wechselstromgenerators (G) resultierende Resonanzfrequenz des LC-Kreises von der Vorverarbeitungseinrichtung (19') und/oder Auswerteeinrichtung (25) festgestellt und zur Steuerung der Betriebsart der Vorverarbeitungseinrichtung (19') und/oder der Auswerteeinrichtung (25) verwendet wird.

5. Leckage-Erkennungssystem nach Anspruch 3, dadurch gekennzeichnet, daß zwischen der Vorverarbeitungseinrichtung (19') und dem Indentifikationskondensator (C) ein Übertrager (T) angeordnet ist, dessen sekundäre Wicklung (L) zusammen mit dem Indentifikationskondensator (C) den LC-Kreis bildet und dessen Primärwicklung mit der Anregungssignalquelle (G) und mit dem Mikrocontroller (39') verbunden ist.

6. Leckage-Erkennungssystem nach Anspruch 5, dadurch gekennzeichnet, daß die Vorverarbeitungseinrichtung (19') einen Resonanzfrequenz-Detektor zur Detektion der von dem LC-Kreis gelieferten Resonanzfrequenz aufweist, wobei das Detektionssignal des Resonanzfrequenz-Detektors die Betriebsart der Vorverarbeitungseinrichtung (19') und/oder der Auswerteeinrichtung (25) steuert.

7. Leckage-Erkennungssystem nach Anspruch 6, dadurch gekennzeichnet, daß die Vorverarbeitungseinrichtung (19') und/oder die Auswerteeinrichtung (25) einen Mikrocontroller (39') aufweist, in dem für jeden anschließbaren Sensortyp ein Unterprogramm für die Verarbeitung der Sensorsignale des jeweiligen Sensortyps gespeichert ist, und daß das Detektionssignal die Auswahl des jeweiligen Unterprogramms steuert.

8. Leckage-Erkennungssystem nach einem der Ansprüche 1 bis 7, dadurch gekennzeichnet, daß die Vorverarbeitungseinrichtungen (19; 19') sämtlicher Leckagesensoren (11; RS) über eine einzige gemeinsame Busleitung (23) mit der Auswerteeinrichtung (25) verbunden sind.

9. Leckage-Erkennungssystem nach einem der Ansprüche 1 bis 7, dadurch gekennzeichnet, daß die Leckagesensoren (11; RS) in Gruppen (17) unterteilt sind, die je mittels einer der jeweiligen Gruppe (17) gemeinsamen seriellen Busleitung (23) mit der Auswerteeinrichtung (25) verbunden sind.

10. Leckage-Erkennungssystem nach einem der Ansprüche 1 bis 10, dadurch gekennzeichnet, daß der Auswerteeinrichtung (25) eine Überwachungseinrichtung (27) nachgeschaltet ist, die dann, wenn die Auswerteeinrichtung (25) eine Leckage an der Stelle eines oder mehrerer Leckagesensoren (11; RS) feststellt, ein Alarmsignal abgibt.

11. Leckage-Erkennungssystem nach einem der Ansprüche 1 bis 11, dadurch gekennzeichnet, daß jeder Leckagesensor (11; RS) ein Sensormaterial aufweist, dessen spezifischer elektrischer Widerstand sich bei Beaufschlagung mit Leckagesubstanz in vorbestimmter Weise ändert, und daß der elektrische Widerstand des Sensormaterials von der Vorverarbeitungseinrichtung (19; 19') erfaßt und mittels eines Analog/Digital-Wandlers (37) in ein digitales Meßdatensignal umgesetzt wird.

12. Leckage-Erkennungssytem nach Anspruch 11, dadurch gekennzeichnet, daß das Sensormaterial in ein die Leckagesubstanz absorbierendes Material eingebettet ist.

13. Leckage-Erkennungssystem nach Anspruch 11 oder 12, dadurch gekennzeichnet, daß das Sensormaterial und gegebenenfalls das absorbierende Material streifenförmig ausgebildet sind.

14. Leckage-Erkennungssystem nach einem der Ansprüche 1 bis 13, dadurch gekennzeichnet, daß die Temperaturkompensationseinrichtung einen Temperaturfühler (49) aufweist und bei einer Abweichung der Ist-Temperatur des je zugehörigen Leckagesensors (11; RS) von einer vorbestimmten Nenntemperatur eine korrigierende Kompensation des Meßdatensignals der zugehörigen Vorverarbeitungseinrichtung (19; 19') bewirkt.

15. Leckage-Erkennungssystem nach einem der Ansprüche 1 bis 14, dadurch gekennzeichnet, daß der Leckagesensor (11; RS) und die ihm zugeordnete Vorverarbeitungseinrichtung (19) als integrierte Einrichtung in einem gemeinsamen Gehäuse untergebracht sind.

16. Leckage-Erkennungssystem nach einem der Ansprüche 3 bis 14, dadurch gekennzeichnet, daß der Leckagesensor (11; RS) und das Sensortyp-Identifikationselement (C) als gemeinsame Baueinheit (B) ausgebildet sind, die mittels einer Steckverbindungsvorrichtung (S) an die Vorverarbeitungseinrichtung (19') ansteckbar ist.

17. Leckage-Erkennungssystem nach einem der Ansprüche 1 bis 16, dadurch gekennzeichnet, daß die serielle Busleitung als Lichtwellenleiter (51) ausgebildet ist.

18. Leckage-Erkennungssystem nach einem der Ansprüche 1 bis 16, dadurch gekennzeichnet, daß die serielle Busleitung (23) als elektrische Zweidrahtleitung ausgebildet ist.

19. Leckage-Erkennungssystem nach einem der Ansprüche 1 bis 16, dadurch gekennzeichnet, daß die Vorverarbeitungseinrichtung (19; 19') eine Batterie zur unabhängigen Spannungsversorgung aufweist.

20. Leckage-Erkennungssystem nach einem der Ansprüche 1 bis 16, dadurch gekennzeichnet, daß die Leitungsanordnung (29) eine serielle Energieversorgungsleitung mit Abzweigungen (33) zu den einzelnen Vorverarbeitungseinrichtungen (19; 19') zu deren elektrischer Energieversorgung aufweist.

21. Verfahren zur Kalibrierung eines Leckage-Erkennungssystems nach einem der Ansprüche 1 bis 13, dadurch gekennzeichnet, daß die Leckagesensoren (11; RS) zunächst in nicht von Leckagesubstanz kontaminierter Umgebung in Betrieb gesetzt werden, der dabei entstehende Meßwert als Referenzmeßwert gespeichert wird und die bei den nachfolgenden Leckageüberwachungsmessungen erhaltenen Meßwerte mit dem Referenzmeßwert verglichen werden.

22. Verfahren zur Sensortypidentifikation eines Leckage-Erkennungssystems nach einem der Ansprüche 2 bis 20,
dadurch gekennzeichnet,
daß die Vorverarbeitungseinrichtungen (19') zunächst mit den gewählten Sensortypen verbunden werden,
und daß dann mittels der Erkennungseinrichtungen automatisch die Sensortypen identifiziert und die Verarbeitungseinrichtungen (19') und/oder die Auswerteeinrichtungen (25) auf die den identifizierten Sensortyen entsprechenden Betriebsarten eingestellt werden.
